# Europäisches Patentamt

## European Patent Office

### Office européen des brevets

(11) Veröffentlichungsnummer: **0 405 409 A1**

(12) # EUROPÄISCHE PATENTANMELDUNG

(21) Anmeldenummer: **90112054.3**

(22) Anmeldetag: **25.06.90**

(51) Int. Cl.⁵: **C03C 25/02, C03C 25/06**

(30) Priorität: **27.06.89 DE 3921039**

(43) Veröffentlichungstag der Anmeldung:
**02.01.91 Patentblatt 91/01**

(84) Benannte Vertragsstaaten:
**AT BE CH DE ES FR GB IT LI LU NL SE**

(71) Anmelder: **FRENZELIT-WERKE GMBH & CO.**
**KG KG**
**Postfach 1140**
**D-8582 Bad Berneck/Frankenhammer(DE)**

Anmelder: **CIBA-GEIGY AG**
**Klybeckstrasse 141**
**CH-4002 Basel(CH)**

(72) Erfinder: **Füssmann, Klaus**
**Seidelsberg 2**
**D-8656 Thurnau(DE)**
Erfinder: **Schnabel, Manfred, Dipl.-Ing. (FH)**
**Weberstrasse 22**
**D-8653 Mainleus(DE)**
Erfinder: **Schmidt, Dr., Dipl.-Chem.**
**Sterntalerring 58**
**D-8580 Bayreuth(DE)**
Erfinder: **Bosshard, Hans-Heinrich, Dr.,**
**Dipl.-Chem.**
**Stockertweg 1**
**CH-4123 Allschwil(CH)**
Erfinder: **Herrmann, Manfred, Dipl.-Ing.**
**Rombergstrasse 2**
**D-6374 Steinbach/Ts(DE)**
Erfinder: **Frank, Othmar, Dipl.-Ing. (FH)**
**Feldbergstrasse 21**
**D-6239 Kriftel(DE)**

(74) Vertreter: **Patentanwälte Deufel- Schön-**
**Hertel- Lewald**
**Isartorplatz 6**
**D-8000 München 2(DE)**

(54) **Verfahren zum Färben von Glasfasern.**

(57) Verfahren zum Färben oder Bedrucken von Glasfasern, insbesondere textilen Glasfasern in verschiedenen Aufmachungsformen, indem man die Fasermaterialien nach einer Säurevorbehandlung mit anionischen Farbstoffen in Gegenwart von kationaktiven Verbindungen färbt oder bedruckt. Die kationaktiven Verbindungen können vor dem eigentlichen Färbeprozess auf das Fasermaterial aufgebracht werden oder auch zusammen mit dem Farbstoff aus der gleichen Färbeflotte oder Druckpaste appliziert werden. Als kationaktive Verbindungen eignen sich insbesondere polyquaternierte Ammoniumverbindungen. Man erhält egal gefärbte Glasfasermaterialien mit guten Lichtechtheiten.

## VERFAHREN ZUM FÄRBEN VON GLASFASERN

Die vorliegende Erfindung betrifft ein Verfahren zum lichtechten Färben oder Bedrucken von Glasfasern.

Es gibt bereits zahlreiche Verfahren und Vorschläge zum Färben von Glasfasern. Früher wurden sie meist mit Pigmentfarbstoffen in Gegenwart von geeigneten Bindemitteln gefärbt, da ja die Glasfasern selbst keine ausreichende Farbstoffaffinität aufweisen.

Diese so gefärbten Glasfasern bzw. die daraus hergestellten textilen Fasermaterialien haben u.a. den Nachteil, dass sie sich beim Erhitzen schwarz färben und gegebenenfalls auch toxische Gase entwickeln können. Ihr Einsatz als unbrennbare Dekortextilmaterialien oder auch in Form von Glasfasermatten im Bautenschutz ist daher nicht länger möglich.

Es besteht daher ein Bedarf an gefärbten Glasfasern, die ohne den Zusatz von organischen Bindemitteln gefärbt sind.

Aus diesem Grunde gab es schon Versuche, Glasfasern direkt, d.h. ohne den Zusatz von organischen Bindemitteln, anzufärben. So beschreibt z.B. die US-A-2 582 919 ein Verfahren, gemäss welchem durch eine Säurebehandlung aus Glasfasern bis zu 25% ihres Ausgangsgewichtes extrahiert wird, um negativ aufgeladene Poren in der Oberfläche der Glasfasern zu bilden, wodurch positiv geladene Farbstoffionen, wie diejenigen von basischen Farbstoffen, direkt auf die Glasfasern aufziehen können. Solche Fasern zeigen jedoch durch die Extraktion einen so starken Festigkeitsabfall, dass sie in der Regel nicht mehr auf den in der Glasfasertechnik üblichen Textilmaschinen weiter verarbeitet werden können. Dies gilt auch für eine ähnliche Arbeitsweise der FR-A-1 420 107.

Gemäss JP-A-76/53077 werden Glasfasern mit sauren Salzen, wie Natriumbisulfit, oder Sulfaminsäure, Sulfanilsäure, Aminonaphthalinsulfonsäure oder p-Toluolsulfonsäure vorbehandelt und dann mit basischen Farbstoffen, z.B. C.I. Basic Red 17, in der Hitze gefärbt.

Die DE-C-738 145 beschreibt die Behandlung von Glasfasern mit Fluorwasserstoffsäure oder Alkalifluoriden und Säuren, wobei weitere anorganische und organische Säuren zugesetzt sein können. Die so behandelte Faser wird ohne Spülung mit Alkalihydroxid behandelt, wodurch sich ein Film von kolloidaler Kieselsäure auf der Faser bildet. Anschliessend wird mit einem basischen Farbstoff gefärbt, wobei jedoch noch Beizmittel, wie z.B. Schwefeldiphenole, Tannine oder Antimon- oder Eisensalze bei der Vorbehandlung zugesetzt werden müssen.

Die US-A-3 617 162 betrifft schliesslich die Behandlung von Glasfasern mit einer wässrigen Lösung von Chromsäure, die dann nach dem Waschen mit kationischen oder basischen Farbstoffen oder mit Beizenfarbstoffen gefärbt wird.

Alle diese so gefärbten Fasermaterialien haben aber den Nachteil, dass sie unabhängig von der Festigkeitsverschlechterung bei Säurebehandlung für Dekorationszwecke nicht hinreichend lichtecht sind.

Eine deutliche Verbesserung dieser Nachteile zeigt das Verfahren der DE-C-37 25 505, gemäss dem Glasfasern bzw. daraus hergestellte Textilfasermaterialien ebenfalls einer Säurebehandlung, jedoch nur bis zu einem Extraktionsgrad von höchstens 2% unterworfen werden und dann gegebenenfalls nach Zwischentrocknung die Färbung mit basischen Acrylfarbstoffen mit einem K-Wert von $\leq$3,5 in einem pH-Bereich von 0 bis 3, gegebenenfalls unter Zusatz von Netzmitteln und Komplexbildnern, bei einem Flottenverhältnis von 1 : 4 bis 1 : 15 und bei einer Temperatur von etwa 15°C bis 130°C erfolgt. Nach der Färbung wird in üblicher Weise gespült, gegebenenfalls neutralisiert und anschliessend nachbehandelt. Gemäss einer Variante des Verfahrens wird für die Färbung eine vorher säurebehandelte und getrocknete, gegebenenfalls trocken zwischengelagerte, Ware eingesetzt und die Färbung bei einem pH-Wert, der einer wässrigen Essigsäure von 0,5 bis 2 g/l entspricht, durchgeführt. Diese so gefärbten Fasermaterialien zeigen zwar bessere Lichtechtheiten, sind jedoch für Dekorationszwecke nicht ausreichend. So werden selbst bei einer Nachbehandlung mit Lichtschutzmitteln nur Lichtechtheitsnoten von etwa 1 bis 3 erreicht. Für textile Dekorationsstoffe wären aber Lichechtheitsnoten von etwa 5 bis 6 wünschenswert.

Aufgabe der vorliegenden Erfindung ist es daher, ein Verfahren zum Färben und Bedrucken von Glasfasern bereitzustellen, das zu gefärbten/bedruckten Glasfasermaterialien führt, die sich insbesondere durch eine deutlich verbesserte Lichtechtheit auszeichnen.

Es wurde nun gefunden, dass man die gestellte Aufgabe erfindungsgemäss lösen und ausgezeichnet lichtecht gefärbte/bedruckte Glasfasern erhalten kann, wenn man die Glasfasern oder die daraus hergestellten textilen Fasermaterialien mit anionischen Farbstoffen in Gegenwart von kationaktiven Verbindungen färbt oder bedruckt.

Gegenstand der vorliegenden Erfindung ist daher ein Verfahren zum Färben oder Bedrucken von gegebenenfalls entschlichteten Glasfasern, die einer Säurebehandlung unterworfen und danach gegebenenfalls getrocknet und/oder zwischengelagert sind, dadurch gekennzeichnet, dass man die Glasfasern mit anionischen Farbstoffen in Gegenwart von kationaktiven Verbindungen färbt oder bedruckt.

Die Säurebehandlung kann mit üblichen Mineralsäuren, wie konzentrierter Salzsäure oder insbesondere Salpetersäure bei 20 bis 100°C und einer Behandlungsdauer von 1 bis 60 Minuten erfolgen. Die Säurebehandlung wird üblicherweise bis zu einem Extraktionsgrad von höchstens 2 Gew.-% durchgeführt.

Unter anionischen Farbstoffen sollen dabei solche Farbstoffe verstanden werden, die anionische Gruppen, z.B. $-SO_3^{\ominus}$ oder $-COO^{\ominus}$, oder in anionische Gruppen überführbare Reste enthalten. Es handelt sich dabei z.B. um die dem Fachmann bekannten Direkt-, Säure-, Metallkomplex-, Reaktivoder auch Küpenfarbstoffe, wie sie z.B. im Colour Index, herausgegeben von der Society of Dyers and Colourists, als direct, acid, reactive und vat dyes beschrieben sind. Bevorzugt sind die Direkt-, Säure- und Metallkomplexfarbstoffe.

Bei den kationaktiven Verbindungen handelt es sich im wesentlichen um stickstoffhaltige Verbindungen, die kationische Gruppen enthalten oder bilden können und dem Fachmann z.B. als Textilhilfsmittel in Form von u.a. Egalisiermitteln, Retardern, Fixiermitteln oder auch Weichgriffmitteln bekannt sind.

Es kommen niedermolekulare, oligomere oder auch polymere kationische Verbindungen infrage, wobei diese z.B. als Salze von primären, sekundären oder tertiären Aminen, insbesondere als quaternierte Ammoniumverbindungen vorliegen können.

Entsprechend der Zahl der in den Verbindungen vorhandenen kationaktiven Stickstoffatome handelt es sich um Mono- oder Polyammoniumsalze bzw. (mono)-quaternierte oder polyquaternierte Ammoniumsalze

Mit der Erhöhung der Zahl der quaternierten Gruppen bei gleichbleibender Zahl von z.B. den Fettalkylresten nimmt die Affinität der Verbindungen zur Faser und Farbstoff zu.
Beispiele für geeignete kationaktive Verbindungen sind:
primäre, sekundäre oder tertiäre $C_8$-$C_{18}$-Fettamine in Salzform (Acetate), oder quaterniert mit üblichen Quaternierungsmitteln, wie Dimethylsulfat, Epichlorhydrin oder Benzylchlorid; Polyethyleniminharze im Molekulargewichtsbereich von etwa 100'000 bis 600'000; Kondensationsprodukte aus Polyethyleniminen und $C_{12}$-$C_{18}$-Fettsäuren; Kondensationsprodukte aus Polyethylen und Polyaminen; Harnstoff- oder Melamin-Formaldehyd-Kondensationsprodukte; Kondensationsprodukte aus Harnstoffderivaten und Ethanolamin; Kondensationsprodukte aus $C_{12}$-$C_{18}$-Fettsäuren und Polyaminen (Diethylendiamin, Ethylendiamin, Diethylentriamin) in Salzform oder quaterniert mit üblichen Quaternierungsmitteln, z.B. Oleyldiethylethylendiamin als Halogenid oder Acetat; Kondensationsprodukte aus (polymeren) Polyaminen und Epichlorhydrin; Pyridinium- oder Imidazoliniumsalze, wie z.B. (poly)quaternierte Pyridin- (z.B. Cetylpyridiniumchlorid) oder Imidazolinderivate, ferner quaternierte Piperidin- und Polypiperidinderivate.

Das erfindungsgemässe Färbeverfahren kann einbadig oder zweibadig durchgeführt werden, d.h. die kationaktiven Substanzen können der Färbeflotte zugesetzt werden odewr die Faser wird zuerst mit der kationaktiven Substanz behandelt und dann wird, gegebenenfalls nach Zwischenspülen und gegebenenfalls nach Zwischentrocknen oder Zwischenlagern, die Faser in die Färbeflotte eingebracht. Das Verfahren funktioniert mit und ohne Zwischentrocknen und gegebenenfalls Zwischenlagerung der Glasfasern nach der Säurevorbehandlung.

Das erfindungsgemässe Färbeverfahren kann diskontinuierlich aber auch kontinuierlich durchgeführt werden.

Beim diskontinuierlichen Verfahren erfolgt die Färbung wie auch die Säurevorbehandlung vorzugsweise in üblichen Hochtemperatur(HT)-Apparaturen und Einhaltung eines Temperaturbereichs, wobei die Färbung wie die Säurevorbehandlung vorzugsweise in einer wässrigen Flotte erfolgt, die kontinuierlich von Raumtemperatur (etwa 15 bis 20°C) innerhalb von etwa 15 bis 60 Minuten auf Temperaturen von 50°C bis nahe dem Siedepunkt (kleiner 100°C) erhitzt, 30 bis 120 Minuten beiu dieser Temperatur gehalten und dann innerhalb von 15 bis 60 Minuten auf Temperaturen im Bereich von 50°C bis Raumtemperatur abgekühlt wird. Die Behandlung mit der kationaktiven Verbindung kann, wenn sie vor der Färbung erfolgt, bei Raumtemperatur oder auch bei erhöhter Temperatur (15 bis 80°C) erfolgen.

Nicht nur der Temperaturverlauf beim Färben unterscheidet sich stark von dem der üblichen Textilfärberei, sondern sowohl für die Behandlung mit der kationaktiven Verbindung als auch für das Färben wird in der Regel ein etwas anderes Flottenverhältnis angewandt werden, als dies in der Textilfärberei üblich ist. Während in der üblichen Textilfärberei das Flottenverhältnis etwa 1:10 bis 1:40 beträgt, soll sowohl bei der Behandlung mit der kationaktiven Verbindung als auch vor allem beim Färben der Glasfasern das Flottenverhältnis geringer sein und etwa 1:4 bis 1:15, vorzugsweise etwa 1:5 betragen. Dieses Flottenverhältnis hängt auch von der Materialdichte ab und wird dann umso kleiner gewählt je grösser die Dichte des Glasfasermaterials ist. Kleinere Flottenverhältnisse sind nicht nur wirtschaftlicher, sondern auch weniger umweltbelastend, da weniger Abwasser entsteht.

Wird das erfindungsgemässe Färbeverfahren kontinuierlich geführt, dann kann man die säurevorbehandelten Glasfasern z.B. mit einer Lösung der kationaktiven Verbindungen (auf einem Foulard) imprägnieren, auf eine gewünschte Gewichtszunahme abquetschen, gegebenenfalls zwischentrocknen, dann mit der Farbstofflösung imprägnieren und nach dem Abquetschen und gegebenenfalls Trocknen des Fasermaterials den Farbstoff auf der Faser fixieren, z.B. durch Kaltlagern (Pad-Batch-Verfahren, etwa 8 bis 24 Stunden bei Raumtemperatur, 20 bis 30°C), Dämpfen (Pad-Steam-Verfahren, etwa 1 bis 20 Minuten bei etwa 100 bis 130°C) oder Thermofixieren (Pad-Thermofix, Thermosol-Verfahren, etwa 1 bis 20 Minuten bei etwa 100 bis 230°C).

Gegebenenfalls kann man auch hier einbadig arbeiten, d.h., man imprägniert die Glasfasern mit einer Lösung, die die kationaktive Verbindung und den Farbstoff enthält.

Es ist ferner möglich, auch die Säurevorbehandlung in die kontinuierliche Verfahrensführung miteinzubeziehen.

Anstelle einer Imprägnierung auf dem Foulard kann man die kationaktiven Verbindungen auch auf die säurevorbehandelten Glasfasern aufdrucken.

Anstelle des Färbeverfahrens können die säurevorbehandelten und mit einem kationischen Harz beschichteten Glasfasern auch in üblicher Weise mit entsprechenden Farbstoffzubereitungen (Farbstoffpasten) bedruckt werden.

Die kationaktiven Verbindungen können dabei vor dem eigentlichen Bedrucken der Glasfasern aus einer separaten Flotte auf die Glasfasern aufgebracht werden, wobei letzteres nach der Säurevorbehandlung getrocknet und/oder zwischengelagert sein können. Andererseits können die Glasfasern in einer separaten Flotte mit der Säure und den kationaktiven Verbindungen (vor) behandelt und dann - nachdem sie gegebenenfalls getrocknet und/oder zwischengelagert sind - mit einer Druckpaste bedruckt werden.

Schliesslich kann man die Glasfasern, die nach der Säurevorbehandlung gegebenenfalls getrocknet und/oder zwischengelagert sein können, mit Druckpasten bedrucken, die neben den anionischen Farbstoffen gleichzeitig die kationaktiven Verbindungen enthalten.

Nach Beendigung des Färbeverfahrens kann das gefärbte Fasermaterial in üblicher Weise gespült, neutralisiert und nachbehandelt werden, indem z.B. eine Appretur oder ein Ueberzug insbesondere ein wasserdampfdichter Ueberzug auf dem Fasermaterial gebildet wird.

Dazu werden beispielsweise vernetzungs- oder polymerisierbare Polymere oder Vorpolymere auf das Fasermaterial aufgebracht und gegebenenfalls vernetzt oder gehärtet. Der gebildete wasserdichte Ueberzug soll insbesondere dazu dienen, dass in den Fasern ein Restwassergehalt von 2 bis 5 Gew.-% verbleibt.

Die Färbungen und Drucke sind reproduzierbar, dies gilt sowohl für den Einsatz einzelner Farbstoffe als auch für Farbstoffmischungen. Es können egale Färbungen/Drucke in hellen, mittleren und dunklen Farbtönen hergestellt werden, die sehr gut lichtecht sind.

Bei den im erfindungsgemässen Färbeverfahren eingesetzten Glasfasern handelt es sich insbesondere um textile Glasfasern, die in verschiedenen Aufmachungsformen, insbesondere als Flocke, Garne, Gewebe, Gewirke oder Vliese vorliegen können. Befindet sich auf dem zu färbenden Fasermaterial eine Schlichte oder irgendeine andere Avivage, so empfiehlt es sich, das Fasermaterial vor dem Färbeprozess zu entschlichten oder zu waschen.

Die folgenden Beispiele erläutern die Erfindung. Teile und Prozente beziehen sich auf das Gewicht, sofern nicht anders angegeben. Die Temperaturen sind in Celsiusgraden angegeben.

Beispiel 1

Vorbehandlung:

Glasgarn wird in einem HT-Färbeapparat (Fassungsvermögen 18 l) in einer Flotte vorbehandelt, die 10 g/l Salpetersäure (52/53%) und 1 g/l nichtionogene Alkylpolyglykolether (Perenin GNS) enthält. Das Flottenverhältnicht beträgt 1 : 5. Innerhalb von 20 Minuten wird die Flotte von 40°C auf 80°C aufgeheizt, dann 40 Minuten bei 80°C gehalten und schliesslich langsam auf 50°C abgekühlt. Das Garn wird dann gespült, mit wässriger Ammoniumhydroxidlösung (pH-Wert: 8) neutralisiert und bei 110°C getrocknet.

Nach dieser Behandlung liegt das Glasgarn mit negativer Ladung vor. Zur Weiterveredlung wird es vor (bei zweibadiger Arbeitsweise) bzw. während des Färbens (bei einbadiger Arbeitsweise) mit kationaktiven Verbindungen behandelt.

Es ist besonders bemerkenswert, dass nach der Vorbehandlung mit Säure das Garn lagerfähig ist, ohne die Affinität zu kationischen Farbstoffen bzw. den kationaktiven Verbindungen zu verlieren. Die Säurevorbehandlung einerseits und die Behandlung mit den kationaktiven Verbindungen und gegebenenfalls die Färbung müssen also nicht unmittelbar hintereinander durchgeführt werden. Andererseits kann auch die Behandlung mit den kationaktiven Verbindungen und die Färbung getrennt durchgeführt werden. Die mit den kationaktiven Verbindungen behandelten Glasfasern behalten die Eigenschaft der Anfärbbarkeit mit anionischen Farbstoffen über längere Zeit bei.

Beispiel 2

Glasgarn wird in einer wässrigen Flotte (Färbeapparat wie in Beispiel 1) einer Säurebehandlung unterzogen; die kationaktive Verbindung befindet sich in der gleichen Flotte, die 12 g/l Salpetersäure (52/53%), 1 g/l nichtionogene Alkylpolyglykolether und 5 g/l eines hochmolekularen Polyethyleniminharzes (MG 100'000-600'000) oder eines Harzes aus Polyethylen und Polyamin enthält. Die Verfahrensführung, das Spülen, Neutralisieren und Trocknen erfolgt wie in Beispiel 1.

Das Glasgarn besitzt nach dieser Behandlung eine gute Affinität zu anionischen Farbstoffen. Die Lagerfähigkeit des Garns ist gegeben. Dieses einbadige und einstufige Verfahren ist insbesondere für helle Färbungen besonders wirtschaftlich.

Beispiel 3

Das nach Beispiel 1 vorbehandelte Glasgarn wird in einer Flotte, die 5 g/l eines hochmolekularen Polyethyleniminharzes (MG 100'000-600'000) oder eines Harzes aus Polyethylen und Polyamin, 1% eines Gemisches aus Talgfettamin-Ethylenoxidaddukten, die mit Schwefelsäure verestert bzw. mit Dimethylsulfat quaterniert sind, 0,2% eines Farbstoffgemisches aus C.I. Acid Orange 94 und C.I. Acid Orange 154, und 0,3% eines Farbstoffgemisches aus C.I. Acid Yellow 220 und C.I. Acid Yellow 129 enthält, gefärbt (Laborfärbeapparate-AHIBA-Turbocolor, Fassungsvermögen 1 l, Flottenverhältnis 1 : 5). Die Flotte wird dazu innerhalb von 20 Minuten von 50°C auf 95°C aufgeheizt, 30 Minuten bei dieser Temperatur belassen und anschliessend langsam auf 50°C abgekühlt.

Das gefärbte Garn wird gespült und in einer Flotte, die 10 g/l Pretavyl 9179 spez. enthält, nachbehandelt. Anschliessend wird das Garn entwässert und bei 130°C getrocknet.

Das Glasgarn ist lichtecht in einem gelben Farbton gefärbt.

Beispiel 4

Das nach Beispiel 2 vorbehandelte Glasgarn wird in einer Flotte, die 0,5% eines Gemisches aus Talgfettamin-Ethylenoxidaddukten, die mit Schwefelsäure verestert bzw. mit Dimethylsulfat quaterniert sind, 1,0% Essigsäure (60%), 0,6% C.I. Acid Yellow 2,0 (C.I. 11714), 0,3% C.I. Acid Red 251 und 0,3% Acid Black 60 enthält, gefärbt (Laborfärbeapparate-AHIBA-Turbocolor, Fassungsvermögen 1 l, Flottenverhältnis 1 : 5). Die Flotte wird dazu langsam auf 60°C aufgeheizt, 60 Minuten bei dieser Temperatur belassen und anschliessend auf 50°C abgekühlt.

Das Spülen, Nachbehandeln und Trocknen erfolgt wie in Beispiel 3 beschrieben.

Das Glasgarn ist lichtecht in einem grauen Farbton gefärbt.

Beispiel 5

Das nach Beispiel 1 vorbehandelte Glasgarn wird in einer Flotte, die 5 g/l eines Harzes aus Polyethylen und Polyamin enthält und einen pH-Wert von 7 aufweist, bei 80°C kationisiert. Nach kurzem Zwischenspülen wird das Garn mit einer Flotte bei Raumtemperatur imprägniert, die 30 g/l des Farbstoffs C.I. Acid Yellow 220 und 2 g/l eines Gemisches aus Talgfettamin-Ethylenoxidaddukten, die mit Schwefelsäure verestert bzw. mit Dimethylsulfat quaterniert sind, enthält.

Das imprägnierte Glasgarn wird auf eine Gewichtszunahme von 30% abgequetscht, bei 70 bis 100°C getrocknet und anschliessend während 10 Minuten bei 100°C gedämpft oder während 5 Minuten bei 150°C thermofixiert. Danach wird das Glasgarn mit kaltem Wasser gespült und mit einer Appretur versehen. Dazu wird das Glasgarn mit einer wässrigen Flotte, die 50 g/l einer Dispersion eines selbstvernetzenden Acrylat-Copolymers und 15 g/l einer Emulsion eines modifizierten Polysiloxans enthält, auf einem Foulard auf eine Gewichtszunahme von 50% abgequetscht und dann bei 105°C getrocknet.

Man erhält gelb eingefärbtes Glasgarn mit guten Licht-, Reib-und Nassechtheiten.

Beispiel 6

Kreuzspulen mit vorbehandeltem Glasgarn (siehe Beispiel 1) werden in einer HT-Färbeapparatur 10 Minuten bei Raumtemperatur mit einer wässrigen Flotte behandelt, die 0,2 g/l eines Kondensationsproduktes aus p-tert.Octylphenol und 8 Mol Ethylenoxld bei einem Flottenverhältnis von 1:13 enthält. Anschliessend gibt man bei Raumtemperatur im Abstand von 10 Minuten zweimal je 2,5 g/l eines kationischen Polypiperidin-Derivats hinzu, behandelt die Kreuzspulen in dieser Flotte nochmals 10 Minuten bei der gleichen Temperatur, heizt die Flotte dann in 40 Minuten auf 80°C und hält sie 30 Minuten bei dieser Temperatur. Dann gibt man bei gleicher Flottentemperatur und im Abstand von 10 Minuten zweimal je 1,5 ml/l wässrige Natriumhydroxidlösung (50%) hinzu, behandelt die Kreuzspulen noch 20 Minuten bei dieser Temperatur weiter, ehe man die Flotte auf 40°C abkühlt und die Kreuzspulen zweimal mit Wasser spült.

Das so vorbehandelte Glasgarn wird dann wie folgt gefärbt:

In der beschriebenen Färbeapparatur und bei einem Flottenverhältnis von 1:13 werden die Kreuzspulen in einer wässrigen Flotte, die 1 g/l eines Gemisches aus Talgfettamin-Ethylenoxidaddukten, die mit Schwefelsäure verestert bzw. mit Dimethylsulfat quaterniert sind, 10 Minuten lang bei Raumtemperatur vorgenetzt. Dann gibt man 0,3 ml/l einer wässrigen Natriumhydroxidlösung (50%) in die Flotte und nach weiteren 10 Minuten ein Farbstoffgemisch aus 0,30% C.I. Acid Yellow 220, 0,15% C.I. Acid Red 315 und 0,15% C.I. Acid Blue 317.

Die Flotte wird nach 10 Minuten bei Raumtemperatur in 45 Minuten auf 60°C aufgeheizt. Die Kreuzspulen werden dann 60 Minuten bei dieser Temperatur gefärbt. Der End-pH-Wert der Flotte beträgt 10,3. Nach dem Abkühlen der Flotte auf 40°C werden die Kreuzspulen gespült und mit einer Appretur versehen. Dazu werden die Spulen 20 Minuten bei 30°C in einer wässrigen Flotte behandelt, die 8,0 g/l einer Emulsion eines selbstvernetzenden Acrylat-Copolymers und 2,0 g/l einer Polyethylenwachs/ Polydimethylsiloxan (1:1)-Emulsion enthält. Anschliessend wird die Flotte abgeschleudert, und die Spulen werden bei 100°C getrocknet und dann bei 130°C während 60 Sekunden fixiert.

Das Glasgarn ist gleichmässig in einem braunen Farbton angefärbt und zeigt gute Licht-, Wasser- und Waschechtheiten.

Aehnliche Ergebnisse erzielt man auch, wenn man eine Appretur aus wässriger Flotte auf die Glasfasern aufbringt, die 2,0 g/l einer Emulsion eines aminoalkylsubstituierten Polysiloxans und 0,5 g eines nicht ionischen Tensids (p-tert.-Octylphenol-ethylenoxid-Kondensationsprodukt) enthält.

Beispiel 7

Das nach Beispiel 1 vorbehandelte Glasgarn (Glasfaserband) wird mit einer wässrigen Flotte, die 30 g/l eines Harzes auf der Basis von Polyethylen und Polyamin, 1 g/l eines Umsetzungsproduktes aus 1 Mol p-tert.-Octylphenol und 8 Mol Ethylenoxid und 10 g/l einer 4%igen Lösung eines Pfropfpolymers aus einem Glyzerin-Propylenoxidaddukt und Acrylamid enthält, bei Raumtemperatur foulardiert und auf eine Gewichtsaufnahme von 30 abgequetscht. Alternativ kann man das Glasfaserband auch mit einer Harzzubereitung (5 g/l) bedrucken.

Anschliessend wird das so imprägnierte/bedrucke Glasfaserband 4 Minuten bei 130°C getrocknet und fixiert.

Die Färbung erfolgt durch Imprägnieren des Glasfaserbandes bei Raumtemperatur in einer Flotte, die 6 g eines Farbstoffgemisches aus C.I. Acid Yellow 220, C.I. Acid Red 315 und C.I. Acid Blue 317 (Gewichtsverhältnis: 2:1:1), 1 g/l eines Gemisches aus Talgfettamin-Ethylenoxidaddukten, die mit Schwefelsäure verestert bzw. mit Dimethylsulfat quaterniert sind, und 10 g/l einer 4%igen Lösung eines Pfropfpolymers aus einem Glyzerin-Propylenoxidaddukt und Acrylamid, enthält.

Das imprägnierte Glasfaserband wird auf eine Gewichtszunahme von 30% abgequetscht und anschliessend während 4 Minuten bei 130°C thermofixiert. Danach wird das Glasfaserband mit kaltem Wasser gespült und mit einer Appretur versehen. Dazu wird es mit einer wässrigen Flotte, die 20 g/l einer Dispersion eines selbstvernetzenden Acrylat-Copolymers und 5 g/l einer Emulsion eines modifizierten Polysiloxans enthält, auf einem Foulard auf eine Gewichtszunahme von 30% abgequetscht und dann 4 Minuten bei 130°C getrocknet und fixiert.

Man erhält ein braungefärbtes Glasfaserband mit guten Reib-, Nass- und Lichtechtheiten.

Anstelle einer Färbung des Glasfaserbandes durch Imprägnieren kann man dieses auch mit einer entsprechenden Druckpaste bedrucken.

**Ansprüche**

1. Verfahren zum Färben oder Bedrucken von gegebenenfalls entschlichteten Glasfasern, die einer Säurebehandlung unterworfen und danach gegebenenfalls getrocknet und/oder zwischengelagert sind, dadurch gekennzeichnet, dass man die Glasfasern mit anionischen Farbstoffen in Gegenwart von kationaktiven Verbindungen färbt oder bedruckt.

2. Verfahren nach Anspruch 1, dadurch gekennzeichnet, dass man die Glasfasern vor dem eigentlichen Färbeprozess in einer separaten Flotte mit den kationaktiven Verbindungen behandelt.

3. Verfahren nach Anspruch 2, dadurch gekennzeichnet, dass man die Glasfasern nach der Säurebehandlung trocknet und zwischenlagert und dann vor dem eigentlichen Färbeprozess in einer separaten Flotte mit den kationaktiven Verbindungen behandelt.

4. Verfahren nach Anspruch 2, dadurch gekennzeichnet, dass man die Glasfasern vor dem eigentliche Färbeprozess gleichzeitig mit einer Säure und den kationaktiven Verbindungen in einer separaten Flotte behandelt und sie dann gegebenenfalls trocknet und/oder zwischenlagert.

5. Verfahren nach Anspruch 1, dadurch gekennzeichnet, dass man die Glasfasern aus färberischen Flotten färbt, die neben den anionischen Farbstoffen gleichzeitig die kationaktiven Verbindungen enthalten.

6. Verfahren nach Anspruch 5, dadurch gekennzeichnet, dass man Glasfasern färbt, die nach der Säurebehandlung gegebenenfalls getrocknet und/oder zwischengelagert sind.

7. Verfahren nach Anspruch 1, dadurch gekennzeichnet, dass man die Glasfasern vor dem Bedrucken in einer separaten Flotte mit den kationaktiven Verbindungen behandelt.

8. Verfahren nach Anspruch 7, dadurch gekennzeichnet, dass man die Glasfasern nach der Säurebehandlung trocknet und zwischenlagert und dann vor dem Bedrucken in einer separaten Flotte mit den kationaktiven Verbindung behandelt.

9. Verfahren nach Anspruch 7, dadurch gekennzeichnet, dass man die Glasfasern vor dem Bedrucken gleichzeitig mit einer Säure und den kationaktiven Verbindungen in einer separaten Flotte behandelt und sie dann gegebenenfalls trocknet und/oder zwischenlagert.

10. Verfahren nach Anspruch 1, dadurch gekennzeichnet, dass man die Glasfasern mit Druckpasten bedruckt, die neben den anionischen Farbstoffen gleichzeitig die kationaktiven Verbindungen enthalten.

11. Verfahren nach Anspruch 10, dadurch gekennzeichnet, dass man Glasfasern bedruckt, die nach der Säurebehandlung gegebenenfalls getrocknet und/oder zwischengelagert sind.

12. Verfahren nach einem der Ansprüche 1 bis 11, dadurch gekennzeichnet, dass die anionischen Farbstoffe direktziehende, Säure-, Metallkomplex-, Reaktiv- oder Küpenfarbstoffe sind.

13. Verfahren nach einem der Ansprüche 1 bis 12, dadurch gekennzeichnet, dass die kationaktiven Verbindungen niedermolekulare, oligomere oder polymere, stickstoffhaltige Verbindungen, insbesondere Salze von primären, sekundären oder tertiären Aminen sind.

14. Verfahren nach Anspruch 13, dadurch gekennzeichnet, dass die kationaktiven Verbindungen mono- oder polyquaternierte Ammoniumverbindungen sind.

15. Verfahren nach Anspruch 14, dadurch gekennzeichnet, dass die kationaktiven Verbindungen quaternierte Piperidin- oder Polypiperidin-Derivate sind.

16. Verfahren nach einem der Ansprüche 1 bis 6 und 12 bis 15, dadurch gekennzeichnet, dass die Färbung in einer Flotte, die den Farbstoff, gegebenenfalls die kationaktiven Verbindungen und üblichen Hilfsmittel enthält, erfolgt, die kontinuierlich von Raumtemperatur innerhalb von etwa 15 bis 60 Minuten auf 50 °C bis dicht unter den Siedepunkt erhitzt, etwa 30 bis 120 Minuten bei dieser Temperatur gehalten und dann innerhalb von etwa 15 bis 60 Minuten auf 15 bis 50 °C abgekühlt wird.

17. Verfahren nach Anspruch 16, dadurch gekennzeichnet, dass die Färbung in einer Flotte erfolgt, die kontinuierlich von Raumtemperatur innerhalb von etwa 20 bis 40 Minuten auf 60 bis 80 °C erwärmt, etwa 45 bis 90 Minuten bei dieser Temperatur gehalten und dann innerhalb von etwa 15 bis 30 Minuten auf etwa 25 bis 50 °C abgekühlt wird.

18. Verfahren nach einem der Ansprüche 1 bis 6 und 12 bis 17, dadurch gekennzeichnet, dass beim Färben ein Flottenverhältnis von etwa 1:4 bis 1:15 eingehalten wird.

19. Verfahren nach einem der Ansprüche 1 bis 6 und 12 bis 15, dadurch gekennzeichnet, dass man die Glasfasern mit einer Flotte, die den Farbstoff, gegebenenfalls die kationaktiven Verbindungen, und übliche Hilfsmittel enthält, foulardiert und anschliessend den Farbstoff auf den Fasern durch Kaltlagern, Dämpfen oder Thermofixieren fixiert.

20. Verfahren nach einem der Ansprüche 1 bis 19, dadurch gekennzeichnet, dass die gefärbten oder bedruckten Glasfasern mit vernetzungs- oder polymerisierfähigen Polymeren oder Vorpolymeren, welche einen Ueberzug auf der Faser bilden können, nachbehandelt werden.

21. Verfahren nach Anspruch 20, dadurch gekennzeichnet, dass ein wasserdampfdichter Ueberzug auf den gefärbten/bedruckten Glasfasern gebildet wird und in den Fasern ein bleibender Restwassergehalt von 2 bis 5% verbleibt.

22. Verfahren nach einem der Ansprüche 1 bis 21, dadurch gekennzeichnet, dass es sich bei den Glasfasern um textile Glasfasern handelt, die in verschiedenen Aufmachungsformen, insbesondere als Flocke, Garn, Gewebe, Gewirke oder Vlies vorliegen.

23. Die nach dem Verfahren gemäss einem der Ansprüche 1 bis 22 gefärbten oder bedruckten, vorzugsweise textilen Glasfasern.

24. Gegebenenfalls entschlichtete, einer Säurebehandlung unterworfene Glasfasern zur Durchführung des Verfahrens nach Anspruch 1, dadurch gekennzeichnet, dass sie mit einer kationaktiven Verbindung behandelt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | GB-A-2 138 032 (SANDOZ LTD) <br> * Beispiel 2; Seite 1, Zeilen 58-99 * <br> --- | 1,12-16 ,2-11 | C 03 C 25/02 <br> C 03 C 25/06 |
| Y | US-A-4 162 348 (SUMITOMO CHEMICAL CO.) <br> * Patentansprüche * <br> --- | 1-11 | |
| A | BE-A- 558 294 (OWENS-CORNING FIBERGLAS CORP.) <br> ----- | | |
| | | | RECHERCHIERTE SACHGEBIETE (Int. Cl.5) |
| | | | C 03 C |

Der vorliegende Recherchenbericht wurde für alle Patentansprüche erstellt

| Recherchenort | Abschlußdatum der Recherche | Prüfer |
|---|---|---|
| DEN HAAG | 08-10-1990 | BOUTRUCHE J.P.E. |

EPO FORM 1503 03.82 (P0403)